(19) Europäisches Patentamt

European Patent Office

Office européen des brevets

(11) EP 2 375 029 B1

(12) **FASCICULE DE BREVET EUROPÉEN**

(45) Date de publication et mention
de la délivrance du brevet:
**27.05.2015 Bulletin 2015/22**

(21) Numéro de dépôt: **11160475.7**

(22) Date de dépôt: **30.03.2011**

(51) Int Cl.:
*F01P 11/04* (2006.01)   *F16L 55/027* (2006.01)

(54) **Circuit de refroidissement avec dispositif d'isolation**

Kühlkreislauf mit einer Vorrichtung zum Isolieren

Cooling circuit with an insulating device

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.04.2010 FR 1052559**

(43) Date de publication de la demande:
**12.10.2011 Bulletin 2011/41**

(73) Titulaire: **Peugeot Citroën Automobiles SA
78140 Vélizy-Villacoublay (FR)**

(72) Inventeur: **Raguenet, Wilfrid
92260 Fontanay aux Roses (FR)**

(56) Documents cités:
**DE-A1- 19 943 918     DE-U1- 8 904 867
DE-U1- 29 510 598     US-A- 1 697 481
US-A- 3 665 965**

EP 2 375 029 B1

**Description**

La présente invention concerne un circuit de refroidissement d'un moteur comportant un dispositif d'isolation du circuit de refroidissement du moteur pour les fréquences sonores.

Une pseudo-sirène modulée ou « pseudo-goose noise » est un bruit qui croît en fonction de la vitesse de rotation d'un organe qui le génère. Un tel bruit est en outre modulé en phase et/ou en amplitude. Le bruit de sirène modulée est un phénomène de bruit présent sur tous les moteurs thermiques présentant de l'acyclisme au niveau du vilebrequin et des arbres à cames (couples résistants). L'acyclisme du moteur s'explique par une variation de vitesse à l'échappement du piston traduisant le fait qu'un mouvement vertical (mouvement bielle/piston) est transformé en mouvement de rotation (mouvement du vilebrequin). Un tel bruit est d'autant plus marqué que le bruit global du moteur a tendance à diminuer. Ainsi, sur certains véhicules, le bruit de pseudo-sirène modulée est plus particulièrement perceptible dans l'habitacle du véhicule lorsque le moteur est chaud et qu'il fonctionne entre 750 et 950 tr/min. Le bruit est tel que sans modification de l'architecture de l'entraînement de distribution, le véhicule n'est vendable que sous dérogation. Il est donc souhaitable d'atténuer au mieux les perturbations sonores engendrées par le bruit de pseudo-sirène modulée.

Des solutions sont connues de l'art antérieur dans le domaine de la réduction du bruit. C'est ainsi le cas des documents DE 199 43 918 A1, JP-A-2007155217, WO-A-04111520 et US-A-2004055816. Cependant, aucune des solutions précédentes ne concerne à la fois le dispositif de refroidissement du moteur et les fréquences sonores qui sont gênantes pour les personnes se trouvant dans l'habitacle du véhicule. Il existe donc un besoin pour un dispositif permettant de réduire le bruit de pseudo-sirène modulée dans un véhicule.

Pour cela, l'invention propose un circuit de refroidissement d'un moteur selon la revendication 1.

Selon les modes de réalisation, le dispositif peut comporter une ou plusieurs des caractéristiques suivantes :

- la grille a une épaisseur et un premier diamètre, l'épaisseur de la grille étant supérieure au rapport au dixième du premier diamètre.
- la grille comporte onze ouvertures circulaires de diamètres prédéterminés.
- la grille comprend quatre ouvertures circulaires d'un deuxième diamètre et sept ouvertures circulaires d'un troisième diamètre, le deuxième diamètre étant supérieure au troisième diamètre.
- le deuxième diamètre est égal à deux fois le troisième diamètre.
- les centres des quatre ouvertures sont agencés de manière à former les coins d'un carré.
- les sept ouvertures forment une croix dont le centre correspond au centre du carré.
- six des sept ouvertures sont en périphérie du carré et que la septième ouverture est au centre du carré.
- les ouvertures sont réparties selon trois droites parallèles, deux ouvertures des quatre ouvertures étant selon un diamètre avec une des sept ouvertures et trois des sept ouvertures et une des quatre ouvertures étant sur chacune des droites extrêmes selon une corde parallèle au diamètre.
- la grille circulaire comporte un grillage.
- la grille est réalisée avec un matériau inoxydable.
- le dispositif comprend un tube de support définissant un passage de fluide, la grille étant au travers du passage.

Il est également proposé un véhicule comportant le dispositif selon l'un des modes de réalisation précédent.

Selon une variante, le véhicule comprend en outre le circuit de refroidissement comporte une durite reliant un boîtier de sortie d'eau à un aérotherme et le dispositif est dans la durite à une distance sensiblement égale au diamètre de la grille par rapport à l'extrémité de la durite du côté aérotherme.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, des vues d'un exemple de moteur muni de son circuit de refroidissement;
- figure 2, un graphe représentant des spectres de puissance du bruit ambiant ;
- figure 3, un graphe représentant le spectre de l'enveloppe du bruit ambiant dans une plage étendue de fréquences ;
- figure 4, un schéma de dispositif d'expérience avec un oscillogramme ;
- figure 5, une représentation schématique d'un exemple de circuit de refroidissement ;
- figure 6, des courbes d'autospectre de débit pour un exemple de dispositif d'isolation ;
- figure 7, une représentation des fluctuations de pression pour un exemple de dispositif d'isolation ;
- figure 8, des courbes d'autospectre de pression pour un exemple de dispositif d'isolation ;
- figure 9, une vue schématique d'un exemple de grille ne faisant pas partie de l'invention.
- figure 10, une vue d'un exemple de mise en place d'un dispositif d'isolation dans une durite ;
- figure 11, une autre vue d'un exemple de mise en place d'un dispositif d'isolation dans une durite ;

- figures 12 à 15, des vues schématiques d'un exemple de dispositif d'isolation ; le dispositif de la figure 15 ne faisant pas partie de l'invention.
- figures 16, 18, 20, 22 et 26, un graphe représentant des spectres de puissance du bruit ambiant selon certaines conditions ;
- figures 17, 19, 21, 23 et 27, un graphe représentant le spectre de l'enveloppe du bruit correspondant aux environnements dans les conditions des figures 16, 18, 20, 22 et 26 ;
- figures 24, 25 et 28, des vues agrandies des figures 21, 23 et 27 ;
- figure 29, une vue d'un exemple de mise en place d'un dispositif d'isolation à l'extrémité d'une durite.

Il est proposé d'améliorer l'acoustique d'un moteur 2 thermique en analysant la propagation d'une vibration. Cette vibration sonore est un bruit parasite, en l'occurrence une pseudo-sirène modulée. En effet, la perception d'un tel bruit gêne le passager se trouvant à l'intérieur du véhicule. Une telle étude permet de mieux comprendre les différents éléments intervenant dans la propagation du bruit. Il devient alors possible d'envisager plusieurs moyens pour réduire le bruit parasite mesuré. Il sera ainsi proposé une solution indirecte « passive » pour supprimer la perception du bruit sans en ajouter d'autres.

Avant d'étudier la propagation du bruit dans le véhicule, il convient de présenter les différents éléments intervenant dans le cadre de cette propagation.

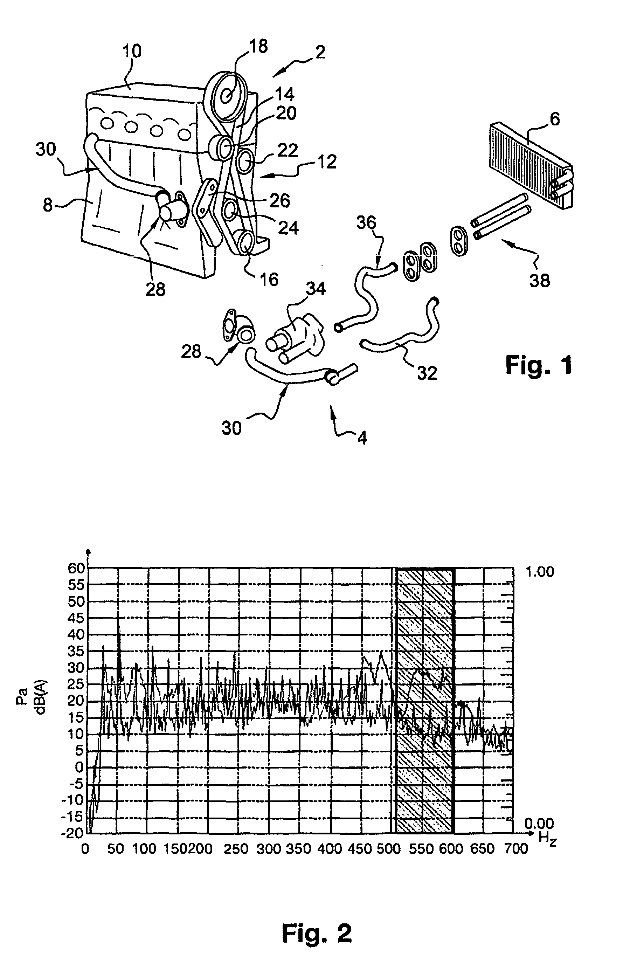

La figure 1 représente une vue en perspective d'un moteur 2 thermique à combustion interne d'un véhicule. Le moteur 2 est muni d'un circuit 4 de refroidissement. La figure 1 comporte également une vue en perspective éclatée du circuit 4 de refroidissement relié à un aérotherme 6. Le moteur 2 comprend une partie inférieure qui est le carter cylindre et une partie supérieure avec la culasse et son système de distribution 12. Le système de distribution 12 représenté est une courroie 14 de distribution. La courroie 14 de transmission pourrait être remplacée par une chaîne de transmission.

Le moteur 2 entraîne en rotation la courroie 14 de transmission sur laquelle s'engrènent différents organes rotatifs. La courroie 14 permet ainsi d'effectuer une liaison entre l'arbre à cames et le vilebrequin. Le pignon 16 du vilebrequin et la poulie 18 de l'arbre à cames sont en effet entraînés par la courroie 14. Le système de distribution 12 comporte en outre un galet tendeur et un galet enrouleur 22 qui évite le battement de brin de la courroie 14. Un brin de la courroie 14 est une partie de la courroie 14 qui relie deux éléments. De plus, la courroie 14 s'engrène avec un pignon 24 d'une pompe 26. La pompe 26 pompe un liquide caloporteur pour le faire circuler dans un circuit 4 de refroidissement du moteur 2. Le circuit 4 est donc un circuit hydraulique raccordé à un aérotherme 6 qui permet de chauffer l'intérieur de l'habitable du véhicule à l'aide du liquide caloporteur réchauffé par le moteur 2. Le liquide caloporteur est généralement de l'eau glycolée de sorte que la pompe 26 est également connue sous le terme de « pompe à eau ».

Selon l'exemple des figures 1, le circuit 4 de refroidissement comprend plus précisément un coude 28 en sortie de la pompe 26 à eau relié à un tuyau 30 lui-même relié à une première durit 32 menant à l'aérotherme 6. L'eau qui circule dans cette partie du circuit 4 est une eau relativement froide pour refroidir le moteur 2. Un boîtier 34 de sortie d'eau fait également partie du circuit 4 de refroidissement et est relié via une deuxième durit 36 à l'aérotherme 6. L'eau qui circule alors dans la deuxième durit 36 est une eau plutôt chaude qui permettra de chauffer l'habitacle.

Un échange de chaleur a ainsi lieu au niveau de l'aérotherme 6. L'aérotherme 6 se trouvant au niveau de l'habitacle du véhicule et étant relié aux durits 32 et 36 via un réseau hydraulique 38 faisant partie du circuit 4 de refroidissement, il sert à la fois à refroidir le liquide de refroidissement et à chauffer l'intérieur de l'habitacle. De ce point de vue, le circuit 4 de refroidissement du moteur 2 peut être aussi considéré comme le circuit 4 de chauffage. Cette eau ainsi refroidie après passage dans l'aérotherme 6, repasse depuis la première durit 32 vers le moteur 2 selon le chemin précédemment décrit du fait du pompage de la pompe 26 à eau.

La source du bruit de pseudo-sirène modulée se trouve dans la modulation produite par les ordres de premiers rangs du moteur 2. Un ordre du premier rang du moteur 2 est une fréquence $f_i$ définie par la relation suivante : $f_i = iNf_c$ où :

- i est un multiple de $1/N_{b\_tc}$ inférieur ou égale à $(N_{b\_Cyl}/N_{b\_tc})$, où $N_{b\_tc}$ est le nombre de tours complets du vilebrequin du moteur 2 par cycle du moteur 2 et $N_{b\_cyl}$ est le nombre de cylindres du moteur 2,
- N est égal à 1 ; et
- $f_c$ est la fréquence de rotation du vilebrequin, c'est-à-dire le nombre de tours du vilebrequin ou de l'arbre par seconde.

Selon l'exemple de la figure 1, le moteur 2 est un moteur quatre temps à quatre cylindres. Ainsi, un cycle complet de ce moteur 2 se fait en deux tours de vilebrequin ou de l'arbre. Les ordres du premier rang du moteur 2 sont donc les fréquences suivantes : $f_1 = 0,5f_c$, $f_2 = f_c$, $f_3 = 1,5f_c$ et $f_4 = 2f_c$, où $f_c$ est la fréquence de rotation de l'arbre. Dans la suite de cette description, ces ordres sont appelés, respectivement, « ordre 0,5 », « ordre 1 », « ordre 1,5 » et « ordre 2 ».

L'étude de la propagation des différents ordres précédents dans le système de distribution 12 puis dans le circuit 4 de refroidissement a été rendue possible par l'utilisation de plusieurs outils de mesures. Notamment, l'importance d'un bruit de pseudo-sirène modulée dans l'habitacle peut être évaluée grâce à un outil appelé $I_{bruit}$. Un tel outil permet de quantifier la prestation acoustique attendue lorsque le dispositif est intégré dans le véhicule. $I_{bruit}$ est ainsi un indicateur de bruit.

Le bruit ambiant et la fréquence $f_c$ de rotation du vilebrequin sont mesurés à l'aide de capteurs. Plus précisément, la mesure du bruit ambiant est réalisée pendant une période_t pendant laquelle la fréquence de rotation du vilebrequin est constante. On obtient le graphe représentant des spectres de puissance du bruit ambiant de la figure 2.

Ensuite, ces mesures sont échantillonnées par un échantillonneur. Par exemple, la fréquence d'échantillonnage est de 4096 Hz avec une résolution de 1 Hz. On procède également à un fenêtrage du signal acoustique mesuré. Ce fenêtrage est par exemple réalisé à partir d'une fenêtre d'observation de Hanning.

Une fois les différentes mesures échantillonnées et fenêtrées, celles-ci sont acquises et traitées par une unité. Ainsi, cette unité détermine à partir des mesures réalisées la puissance $P_{560-600}$ de la pseudo-sirène modulée dans la plage réduite par rapport à la puissance $P_{510-600}$ du bruit mesurée dans la plage étendue.

Pour cela, l'unité calcule les puissances $P_{560-600}$ et $P_{510-600}$ à partir des mesures réalisées lors de la mesure du bruit ambiant. Ensuite, l'unité calcule un coefficient I1 d'amplification. Le coefficient I1 est par exemple calculé à l'aide de la relation suivante : $I_1 = P_{560-600}/P_{510-600}$. Ce coefficient $I_1$ permet de mesurer l'émergence d'un bruit fort dans la bande réduite par rapport au niveau de bruit dans la bande étendue.

Ensuite, l'unité détermine l'amplitude d'au moins une fréquence de modulation multiple entier d'un des ordres du premier rang du moteur 2 dans la plage étendue [510Hz ; 600Hz]. Par exemple, pour cela, le bruit mesuré est d'abord filtré à l'aide d'un filtre passe-bande pour sélectionner uniquement les fréquences comprises entre 510 et 600 Hz. Ensuite, une transformée de Hilbert est utilisé pour construire le spectre de l'enveloppe du signal filtré.

Par exemple, pour cela, on applique une transformée de Fourrier au signal filtré. Ensuite, la transformée de Fourrier obtenue est transformée en utilisant l'opérateur -j sgn(f) où :

- j est le nombre imaginaire,
- f est une fréquence, et
- sgn(f) est égale à 1 si la fréquence f est positive ou est égale à zéro si la fréquence f est nulle ou est égale à -1 si la fréquence f est négative.

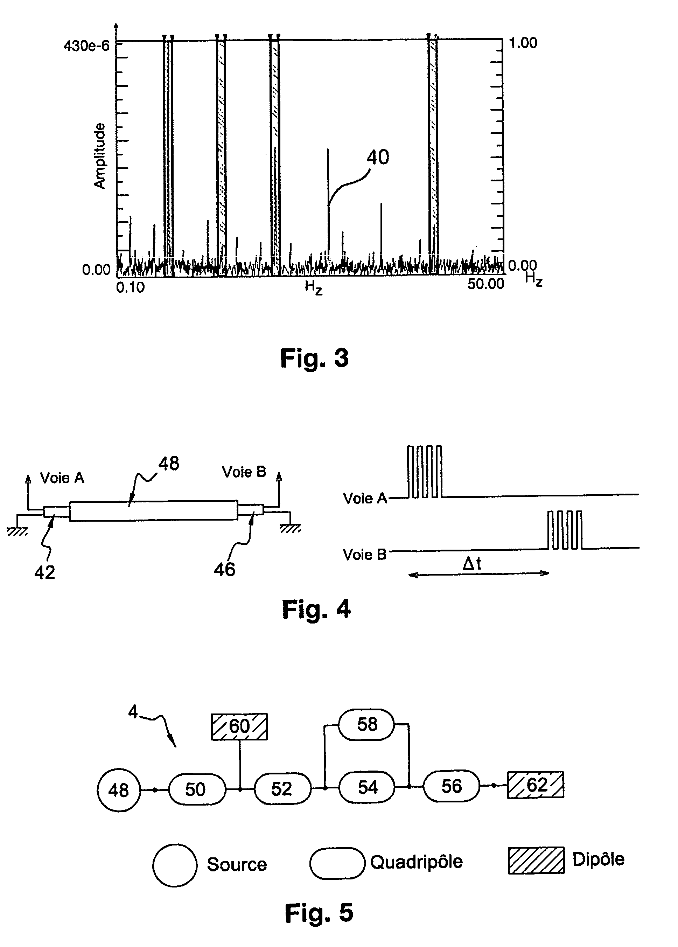

La figure 3 représente un graphe d'un exemple de spectre d'enveloppe 40 obtenu.

Ensuite, dans le spectre 40, on relève l'amplitude des fréquences de modulation correspondant à des harmoniques des ordres de premier rang du moteur 2. Pour cela, on utilise la fréquence de rotation $f_c$ mesurée. Par exemple, pour un régime moteur 2 de 750 tours par minute, la fréquence $f_c$ est égale à 12,5 Hz. Par conséquent, les fréquences $f_1$ à $f_4$ des ordres du premier rang du moteur 2 sont égales, respectivement, à 6,25 Hz, 12,5 Hz, 18,75 Hz et 25 Hz. On relève alors dans le spectre 40 l'amplitude d'au moins une de ces fréquences ainsi que l'amplitude de ses harmoniques. Dans le cas particulier décrit ici, seules les amplitudes des fréquences correspondant aux ordres 0,5 et 1,5 ainsi que les premiers harmoniques de ces fréquences sont relevés. Par exemple, on relève les amplitudes à $E_{0,5}$, $E_1$, $E_{1,5}$ et $E_3$ à, respectivement, 6,25 Hz, 12,5 Hz, 18,75 Hz et 37,5 Hz.

Sur la figure 3, les pics dont l'amplitude est relevée sont mis en évidence par des bandes verticales hachurées.

Ensuite, les amplitudes $A_{0,5}$ et $A_{1,5}$ des harmoniques des fréquences de modulation $f_1$ et $f_3$ sont calculées. Pour tenir compte du caractère impulsionnel de la modulation, on tient également compte dans le calcul de l'amplitude des premières harmoniques des fréquences $f_1$ et $f_3$.

Par exemple, l'amplitude $A_{0,5}$ est calculée à l'aide de la relation suivante :

$$A_{0,5} = 0,5\ E_{0,5} + 0,25\ E_1 + 0,25\ E_{1,5}.$$

De façon similaire, l'amplitude A1,5 est calculée à l'aide de la relation suivante:

$$A_{1,5} = 0,75\ E_1 + 0,25\ E_3.$$

Ensuite, un terme $I_2$ représentatif des amplitudes mesurées et homogène avec une puissance est calculé. Par exemple, le terme $I_2$ est calculé à l'aide de la relation suivante $I_2 = \sqrt{\alpha A_{0,5}^{\ 2} + \beta A_{1,5}^{\ 2}}$ , où $\alpha$ et $\beta$ sont des coefficients de pondération dont la somme est égale à 1.

Ici, une mesure plus précise de la pseudo-sirène modulée est obtenue en donnant plus d'importance à l'ordre 1,5 qu'à l'ordre 0,5. A cet effet, les valeurs des coefficients $\alpha$ et $\beta$ sont par exemple choisies, respectivement, égales à 0,25 et 0,75.

Enfin, la mesure I de la pseudo-sirène modulée est construite à partir des termes $I_1$ et $I_2$. Plus précisément, la mesure I est construite de manière à être proportionnelle à la fois aux termes $I_1$ et $I_2$. Par exemple, la mesure I est obtenue à l'aide de la relation suivante : $I = I_1 \times I_2$.

Il est ensuite possible de construire un indicateur Ibruit de la présence d'une pseudo-sirène modulée directement perceptible par l'ouie humaine. Ici, la valeur de l'indicateur Ibruit est calculée à l'aide de la relation suivante Ibruit = 10 Log(I/Is) où Is est un seuil prédéterminé d'audibilité de la pseudo-sirène modulée en deçà duquel elle n'est pas directement perceptible par l'ouïe humaine.

Par exemple, le seuil Is est égal à une mesure de la pseudo-sirène modulée obtenue dans des conditions de fonctionnement du moteur 2 où la pseudo-sirène modulée n'est pas directement audible par l'ouie humaine.

L'indicateur $I_{bruit}$ permet de prédire la sensation de bruit ressenti par les utilisateurs et en particulier de prédire si la pseudo-sirène modulée est directement audible par l'ouie humaine et avec quelle intensité.

Les outils précédemment présentés permettent d'étudier la propagation des différents ordres du moteur 2 (ordre 0,5, ordre 1, ordre 1,5 et ordre 2) dans le système de distribution 12 puis dans le circuit 4 de refroidissement. En suivant le chemin de propagation du bruit de pseudo-sirène modulée depuis le moteur 2 jusqu'à l'habitacle du véhicule, il est constaté que la transmission se fait en plusieurs temps.

Dans un premier temps, il est possible de mettre en évidence expérimentalement que la transmission du bruit de pseudo-sirène modulée se fait d'abord au niveau de la courroie 14 de distribution qui porte les fréquences de modulation correspondant aux harmoniques de premiers rangs du moteur 2. Dans une configuration d'essai dans laquelle le bruit de pseudo-sirène modulée est marqué, le spectre d'enveloppe est calculé à partir d'une mesure vibratoire faite au vibromètre laser sur le brin reliant la pompe 26 à eau et le galet tendeur 20. L'analyse de ce spectre montre l'importance des fréquences de modulation : 6,25 Hz, 12,5 Hz, 18,75 Hz et 25Hz. Ces fréquences correspondent, au régime de ralenti, aux harmoniques de premiers rangs du moteur 2 : ordre 0,5, ordre 1, ordre 1,5 et ordre 2. La courroie 14 de distribution porte donc les fréquences de modulation correspondant aux harmoniques de premiers rangs du moteur 2, à savoir les fréquences correspondant aux ordres 0,5, ordre 1, ordre 1,5 et ordre 2.

Dans un second temps, la courroie 14 de distribution transmet ces fréquences de modulation au pignon de la pompe 26 à eau. Ainsi, le spectre d'enveloppe calculé à partir de mesures de déplacement (hors plan) du pignon 24 de pompe à eau met en évidence, dans le cas où le bruit de pseudo-sirène modulée est marqué, l'émergence des fréquences 6,25Hz, 12,5Hz, 18,75Hz et 37,5Hz. Les fréquences disparaissent dans une configuration dans laquelle le bruit de pseudo-sirène modulée est absent. Ceci montre que la courroie 14 de distribution transmet au pignon de la pompe 26 à eau les fréquences de modulation correspondant aux ordres 0,5, ordre 1, ordre 1,5, ordre 2 et ordre 3.

Dans un troisième temps, le pignon 24 de pompe à eau transmet les fréquences de modulations à son tour au fluide caloporteur sur la bande de fréquences caractéristique d'une pseudo-sirène modulée. Expérimentalement, pour représenter en fonctionnement le champ de déformation du pignon de la pompe 26, on utilise la vision stéréoscopique. Il s'agit d'un procédé optique qui s'appuie sur le principe de triangulation pour déterminer les coordonnées spatiales d'un objet à partir d'une paire d'images. Les déformations maximales sur le pignon 24 de pompe dans la configuration sans pseudo-sirène modulée se situent aux environs de l'engrènement de la courroie 14 sur le pignon. Dans la configuration avec pseudo-sirène modulée, l'engrènement n'apparaît pas comme une zone de fortes déformations. Les mouvements qui occasionnent des déformations importantes ressemblent davantage à des mouvements de balancier. Sans aucun doute, ces mouvements de balancier sont ensuite imprimés au fluide caloporteur par l'intermédiaire de la turbine de la pompe 26 qui est solidaire du pignon. Des fluctuations de pression synchrones aux mouvements du pignon 24 de pompe dans le fluide caloporteur se retrouvent alors. C'est en effet ce que montrent les résultats des mesures de pression dynamique faites dans le circuit 4 de refroidissement. Ceci prouve que le pignon de la pompe 26 transmet au fluide caloporteur les fréquences de modulation correspondant aux harmoniques de premiers rangs du moteur 2.

Dans un quatrième temps, la partie du circuit 4 de refroidissement comprenant le coude 28 et le tuyau 30 possède des amplifications dans la bande de fréquences comprises entre 500-600Hz, indépendamment de toute résonance de structure. Cela peut se démontrer expérimentalement en comparant des spectres de pression dynamiques issus de mesures au niveau du coude 28 et du tube en présence et en l'absence de bruit de pseudo-sirène modulée. Lorsque le bruit de pseudo-sirène modulée est marqué, une zone d'amplification entre 400 et 700Hz est ainsi mise en évidence. Une telle amplification pourrait provenir d'un mode de structure mais ce n'est pas le cas comme peuvent le montrer des résultats vibratoires obtenus sous excitation artificielle. Sur la bande de fréquence considérée, la réponse vibratoire de la structure du circuit 4 à une excitation au marteau de choc est une absence d'amplification sur le coude 28 et le tuyau 30. Ainsi, l'amplification constatée a sans doute pour origine un mode de conduit. Le mode de conduit est la conséquence d'un phénomène d'interférences produit par des ondes sonore stationnaires, les ondes stationnaire étant issues de réflexions sur les parois du conduit.

Dans un cinquième temps, la partie du circuit 4 placée après le boîtier 34 de sortie d'eau présente des modes de conduit en présence d'ondes stationnaires dans la plage d'excitation du bruit de pseudo-sirène modulée uniquement lorsque le moteur 2 est chaud. Cette partie du circuit 4 hydraulique peut être assimilée au circuit 4 de chauffage puisque c'est cette partie qui permet de chauffer l'habitacle. Dans la suite pour simplifier, on considère que cette partie du circuit 4 se réduit à un conduit mais le raisonnement serait similaire pour une structure plus complexe.

D'abord, il apparaît que la propagation des ondes acoustiques dans le circuit 4 se fait uniquement sous la forme d'onde plane. En considérant l'équation de propagation d'une onde sonore et la relation de dispersion qui en découle, la propagation sous forme d'onde plane (soit les dimensions transversales du circuit 4 petites devant la longueur d'onde) définit une fréquence de coupure $f_c$. Cette fréquence $f_c$ s'exprime mathématiquement sous la forme suivante :

$$fc = 0{,}6\frac{c}{D}$$

où c est la célérité de l'onde dans le fluide et D le diamètre du circuit 4.

La célérité de l'onde dans le fluide peut être déterminée à partir de l'expérience décrite sur la figure 4. Un émetteur 42 et un récepteur 46 d'ultrasons sont fixés sur deux couvercles vissés aux deux extrémités d'un tube 48 étanche, rempli de liquide de refroidissement. La distance d entre l'émetteur et le récepteur est fixée et vaut 0,6 m. L'intervalle de temps $\Delta t$ qui sépare les tensions émises et reçues correspondant à la même salve d'impulsions ultrasonores est mesuré par un oscilloscope dont les voie A (émetteur) et voie B (récepteur) sont représentées sur un oscillogramme schématique. La célérité est égale au rapport entre d et $\Delta t$. L'évolution de la célérité en fonction de la température est obtenue en plaçant le montage de la figure 4 dans une étuve dans laquelle la température est contrôlée. On en déduit que la célérité de l'onde dans le fluide varie entre 1000 m/s à chaud et 1600 m/s à froid. Ainsi la fréquence $f_c$ est comprise dans l'intervalle [18,2 kHz ; 27,2 kHz]. De telles fréquences de coupures ne correspondent pas aux fréquences du bruit de pseudo-sirène modulée qui sont inférieures à 1000 Hz. De ce fait, la propagation des ondes acoustiques dans le circuit 4 de chauffage ne se fait que suivant le mode 0, traduisant dans le circuit 4 l'unique présence d'ondes planes.

Cela entraîne ensuite plusieurs conséquences. Le front d'onde est perpendiculaire à l'axe de propagation. En outre, l'amplitude de la pression acoustique est indépendante de la distance entre la source sonore et le point d'écoute. De plus, les ondes acoustiques de pression et de vitesse sont en phase et sont reliées par la relation P = pcU où P est la pression, p la masse volumique, c la célérité et U la vitesse particulaire.

De plus, savoir que ce sont de telles ondes qui sont à l'origine du bruit permet de déterminer quel est le régime du moteur 2 pour lequel les bruits de pseudo-sirène modulée vont se produire. Il suffit par exemple pour cela de comparer les représentations temporelles du signal de pression acoustique au niveau du tube et au niveau du coude 28. Lorsque le moteur 2 est chaud, les ondes sont en opposition de phase entre le coude 28 et le tuyau 30. Ceci traduit l'existence simultanée d'ondes réfléchies à la même fréquence que les ondes incidentes. De plus, il est constaté que ce sont des ondes pour lesquelles la distribution spatiale d'amplitude est constante. Ce n'est pas le cas lorsque le moteur 2 fonctionne à froid (température à 20° environ) parce que les ondes de pression sont en phase et la distribution spatiale des amplitudes évolue avec le point de mesure. C'est donc le moteur 2 à chaud qui produit le bruit de pseudo-sirène modulée.

Le phénomène ondulatoire constaté lorsque le moteur 2 chaud (liquide de refroidissement à 90 °C ou plus) est caractéristique d'ondes stationnaires. Un calcul simple d'ordre de grandeur permet de confirmer cette conclusion. En effet, dans un tel cas de figure, il existe une résonance (mode de conduit) pour les fréquences qui possèdent une longueur d'onde proportionnelle à 4 fois la longueur du circuit 4. Ainsi, on a :

$$f = (2n+1)\, c/(4l)$$

où f est la fréquence, n est un nombre entier (0,1,2...), c célérité qui dépend de la température et 1 la longueur du conduit.

Les applications numériques amènent les résultats suivants : pour T = 20 °C, une fréquence de f = 900Hz est calculée et pour T = 90 °C, une fréquence de f = 568Hz est calculée. On en déduit à nouveau que le circuit 4 hydraulique présente des modes de conduit (c'est-à-dire des ondes stationnaires) dans la plage d'excitation du bruit de pseudo-sirène modulée uniquement lorsque le moteur 2 est chaud (liquide de refroidissement à 90 °C ou plus).

Ce qui a été décrit dans le cas particulier d'un moteur 2 à quatre cylindres peut s'appliquer à tout type de cylindrée. Le moteur 2 peut être un moteur suralimenté ou non. Il peut également s'agir d'un moteur à essence, d'un moteur Diesel ou d'un moteur hydride. Il peut aussi s'agir d'un moteur à deux, trois ou quatre temps ou plus.

En résumé, il apparaît que la propagation du bruit de pseudo-sirène modulée se fait par l'intermédiaire de la courroie 14 de distribution lorsque le moteur 2 est suffisamment chaud. Celle-ci rayonne ce bruit dans la zone d'engrènement entre la courroie 14, la pompe 26 à eau et le galet tendeur 20 sur une bande de fréquences correspondant aux chocs entre les dents de la courroie 14 et les dents du pignon 24 de la pompe à eau lors de l'engrènement. Le bruit de pseudo-sirène modulée est ensuite transmis au fluide caloporteur du circuit 4 de refroidissement par le pignon 24 de la pompe à eau. Enfin, amplifiée par les modes du circuit 4 hydraulique, le bruit se propage ensuite au véhicule par le liquide de refroidissement pour être perçu dans l'habitacle au travers du rayonnement de l'aérotherme 6.

Une solution pour réduire le bruit de pseudo-sirène modulée est donc de limiter les chocs à l'engrènement courroie 14 et pompe 26 à eau afin d'atténuer la transmission des harmoniques de premiers rangs du moteur 2 à la courroie 14 de distribution. Pour cela, il est possible de définir une courroie 14 dédiée avec profil et hauteur de dent spécifique et une tension de pose réduite. Cependant, une telle méthode de modification de l'entraînement de distribution est extrêmement longue, délicate à concevoir et à valider, coûteux et non généralisable. En outre, les modifications possibles du fait de l'architecture imposée du moteur 2 limitent fortement les possibilités de réduction du bruit. Cette solution ne peut s'appliquer que dans des cas bien spécifiques.

La méthode précédemment proposée reposait sur une modification d'un élément de type actif, soit un générateur de bruit. Au contraire, il sera proposé dans la suite de cette demande des solutions modifiant ou utilisant des éléments passifs. De tels éléments sont passifs au sens où en l'absence d'excitation extérieure, ils ne créent pas de vibration notamment parce qu'ils ne bougent pas. Ceci n'empêche cependant pas que les éléments passifs excités par des éléments actifs ont un impact sur la propagation des vibrations provoquées par les éléments actifs. En contrôlant cet impact, il va être possible de réduire l'amplitude des variations. Pour ce faire plusieurs méthodes peuvent être utilisées. Chacun des dispositifs ou méthodes proposés s'adressera à des fréquences sonores différentes soit des fréquences comprises entre 20 Hz et 20 kHz. Ces fréquences sont notamment différentes des fréquences ultrasonores pour lesquelles la fréquence est supérieure à 20 kHz. Plus particulièrement, les fréquences atténuées seront comprises entre 300 Hz et 1000 Hz et encore plus préférentiellement entre 500 Hz et 700 Hz. De telles fréquences sont en effet caractéristiques du bruit de pseudo-sirène modulée dans un véhicule.

Il est proposé d'abord un procédé de conception de la structure du circuit 4 de refroidissement de moteur 2 atténuant les fréquences sonores. Le circuit 4 de refroidissement est constitué par un ensemble d'éléments simples interagissant entre eux au sein du circuit 4. Un tel procédé comporte une étape de minimisation de l'amplitude de l'onde sonore en sortie de la structure du circuit 4 excitée par une onde sonore initiale (ou onde incidente) prédéfinie par ajustement de la structure du circuit. L'amplitude de l'onde peut correspondre à la pression acoustique ou au débit acoustique de l'onde.

Il est ainsi possible d'adapter et d'optimiser les différents éléments du circuit 4 pour obtenir un circuit hydraulique anti-résonant. Cela permet de réduire le bruit de pseudo-sirène modulée. Une telle solution présente en outre l'avantage d'avoir peu d'impact sur l'architecture du moteur 2 puisque seule la structure du circuit 4 de refroidissement est modifiée.

L'onde initiale prédéfinie peut être une onde plane. Cela permet de simplifier la minimisation tout en gardant une représentation conforme à la réalité physique. En effet, il a été vu précédemment que le bruit de pseudo-sirène modulée se propage sous la forme d'une onde plane.

Dans ce cas d'une onde initiale définie comme une onde plane, la propagation dans le circuit 4 de refroidissement est uniquement faite suivant le mode plan et les conditions de linéarité pression amont pression aval sont remplies. La propagation sonore dans chaque élément du circuit 4 peut alors être simplement formulée par la méthode des matrices de transfert. Une telle méthode utilise des matrices (2x2) qui relient les pressions et les débits acoustiques en entrée et en sortie de chaque élément du circuit 4 de refroidissement. Plus précisément, les dipôles décrivent les impédances de terminaison du circuit 4 (vecteur pression-débit) et les quadripôles décrivent chaque singularité (coude 28, tuyau 30, jonction,...). Ainsi, dans le procédé, l'amplitude de l'onde de sortie peut être calculée à partir de l'amplitude de l'onde d'entrée par une méthode matricielle reliant les pressions et les débits acoustiques en entrée et en sortie de chaque élément du circuit hydraulique. Un tel calcul présente l'avantage d'être facile à mettre en oeuvre.

La figure 5 illustre un exemple schématique de cette modélisation du circuit 4 en éléments simples soit une succession de dipôles et de quadripôles. Depuis la source 48 au dernier dipôle 62, il y a cinq quadripôles 50, 52, 54, 56 et 58 et un dipôle 60. Cela se traduit par l'équation matricielle suivante :

$$\begin{bmatrix} P_S \\ q_S \end{bmatrix} = [M_{62}] [M_{60}] [M_{58}] [M_{56}] [M_{54}] [M_{52}] [M_{50}] \begin{bmatrix} P_E \\ q_E \end{bmatrix}$$

où $P_S$ est la pression de sortie, $q_S$ le débit de sortie, $P_E$ est la pression d'entrée et $q_E$ le débit d'entrée et $M_i$ est la matrice de transfert de taille 2x2 représentative du comportement de l'élément i. La connaissance de ces matrices de transferts permet donc le calcul de la réponse du circuit 4 en tout point.

L'étape de minimisation peut également être menée pour plusieurs ondes initiales prédéfinies. Cela permet d'optimiser la structure pour plusieurs longueurs d'onde différentes et ainsi d'atténuer plusieurs fréquences entendues par l'utilisateur dans l'habitacle.

Les ajustements apportés à la structure peuvent porter sur plusieurs paramètres distincts. Il est ainsi envisageable de modifier la longueur des conduits. On entend ici par conduit tout tube présent dans le circuit 4 de refroidissement, à savoir par exemple le tuyau 30, les durites 32 et 36. L'ajustement peut également porter sur le diamètre des conduits. Il peut ainsi être prévu de brusques changements de diamètres que ce soit par élargissement ou par diminution. Il se créé dès lors des zones de turbulence sur les parois venant atténuer la propagation des ondes sonores dans le circuit 4 de refroidissement. Il est aussi possible d'optimiser la forme du coude 28. La forme du coude 28 peut notamment être modifiée afin de générer une réunion d'écoulements, par exemple entre un écoulement principal et un écoulement secondaire. Ceci permet d'empêcher la propagation des ondes planes. Il est aussi envisageable d'optimiser les formes des vannes, des clapets, des dérivations (aussi désignées sous le terme anglais de « by-pass »), des opercules ou des diaphragmes.

L'ajustement proposé peut également être réalisé en utilisant la mesure I et l'indicateur $I_{bruit}$ présentés précédemment. Les différents éléments du circuit peuvent ainsi être testés et sélectionnés pour limiter ou éliminer l'apparition de bruit de pseudo-sirène modulée.

Il a ainsi été décrit un procédé permettant de rendre le circuit 4 de refroidissement anti-résonant.

Le circuit 4 de refroidissement se comportant comme un ensemble de dipôles et de quadripôles, il est également possible de modifier les ondes stationnaires transmis par le circuit par la mise en place d'un dispositif hydraulique constituant une singularité permettant d'atténuer les bruits au sein de l'habitacle du véhicule. Dans la suite, des procédés de définition concernant un tel dispositif seront présentés. A titre d'exemple, ces procédés seront appliqués à un dispositif comportant une grille, étant entendu qu'ils peuvent s'appliquer à tout type de dispositif d'atténuation.

Dans le but d'optimiser les performances d'un tel dispositif hydraulique, il est également proposé un procédé d'optimisation d'un dispositif d'isolation d'un circuit 4 de refroidissement d'un moteur 2 pour les fréquences sonores. Le procédé comprend une étape de calcul de l'onde incidente sonore arrivant sur le dispositif d'isolation et de calcul de l'onde réfractée par le dispositif d'isolation, le dispositif étant optimisé en minimisant l'amplitude de l'onde réfractée. L'amplitude de l'onde peut correspondre à la pression acoustique ou au débit acoustique de l'onde.

Cela permet d'obtenir un dispositif d'isolation adapté à diminuer l'amplitude des ondes sonores, et en particulier celles correspondant au bruit de « pseudo-goose noise ».

L'étape de minimisation peut également être menée pour plusieurs ondes initiales. Cela permet d'optimiser la structure pour plusieurs longueurs d'onde différentes et ainsi d'atténuer plusieurs fréquences entendues par l'utilisateur dans l'habitacle.

L'onde initiale prédéfinie peut être une onde plane. Cela permet de simplifier la minimisation tout en gardant une représentation conforme à la réalité physique. En effet, il a été vu précédemment que le bruit de pseudo-sirène modulée se propage sous la forme d'une onde plane. L'onde incidente peut être calculée par une méthode matricielle telle que décrite précédemment en utilisant des matrices (2x2) reliant les pressions et les débits acoustiques en entrée et en sortie de chaque élément du circuit 4 de refroidissement. Un tel calcul présente l'avantage d'être facile à mettre en oeuvre.

Le procédé de définition peut comporter en outre une étape de minimisation de la valeur maximale de l'autospectre de débit du dispositif d'isolation par modification des paramètres du dispositif d'isolation. Un autospectre d'une quantité est par définition la transformée de Fourier de la fonction d'autocorrélation de cette quantité. Cela permet d'obtenir un dispositif d'isolation perturbant peu l'écoulement tout en atténuant le bruit

L'évolution de l'autospectre peut être calculée de préférence sous une forme sans dimension en normalisant le débit par le nombre de Mach et en normalisant la fréquence par le nombre de Strouhal St. Cela permet de simplifier le calcul.

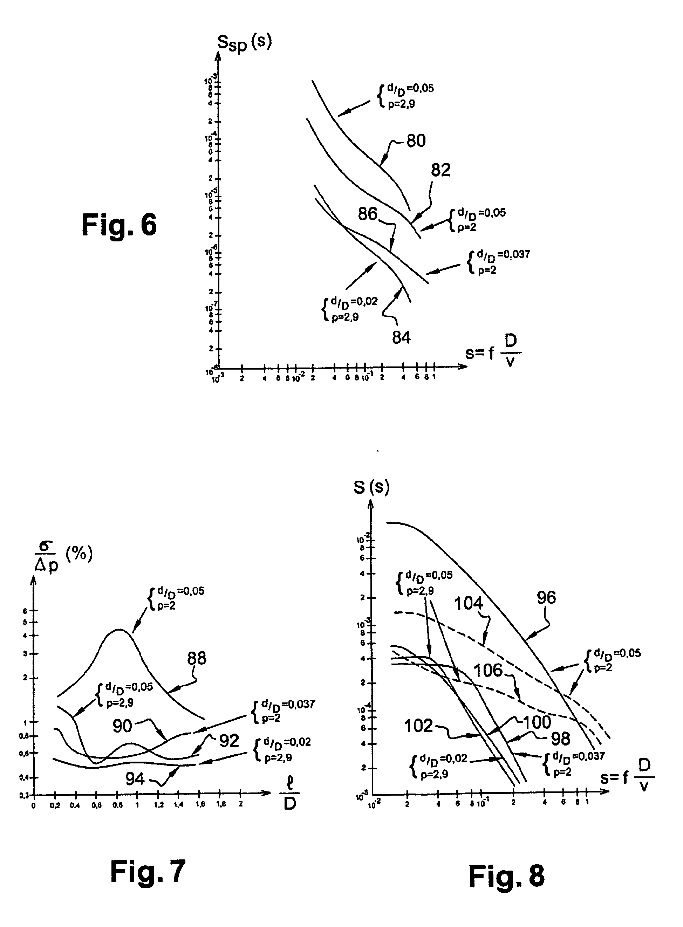

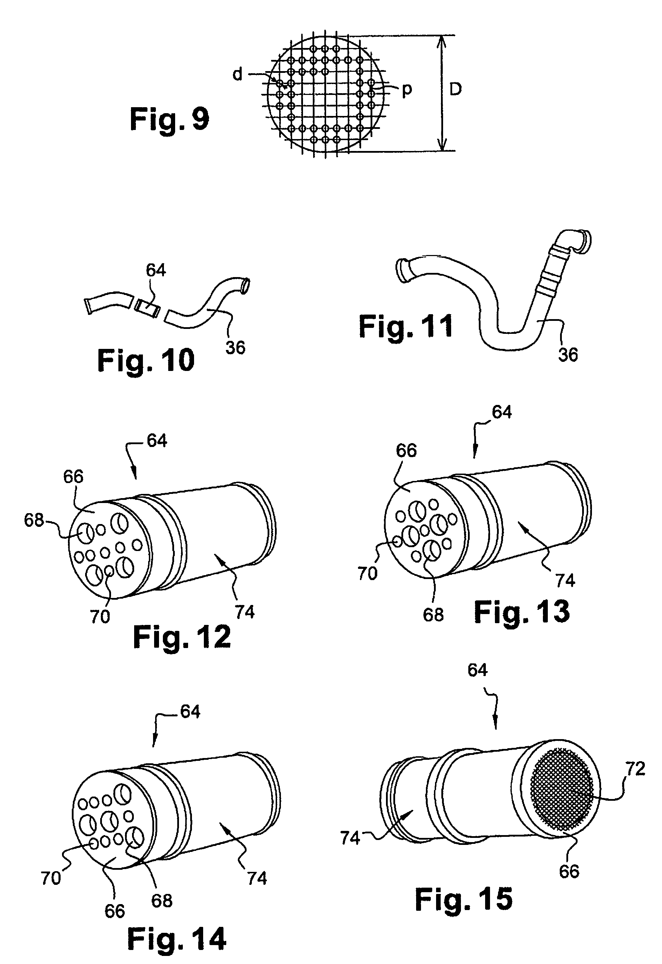

Plusieurs courbes (courbes 80, 82, 84 et 86) d'autospectre de débit sont ainsi représentées sur la figure 6. Ces courbes sont issues de la bibliographie. A titre d'exemple, les dispositifs pour lesquels ces courbes sont représentées sont des grilles circulaires de diamètre D percées d'ouvertures de diamètre d. On appelle dans la suite rapport_diamètre le rapport entre le diamètre d et le diamètre D. D peut être approximé au diamètre de la conduite dans lequel le dispositif peut être mise en place. Chaque ouverture est séparée d'une distance p, p étant la distance entre le bord de chaque ouverture. Les quantités rapport_diamètre et la distance p sont des paramètres caractéristiques d'un tel système. D'autres paramètres peuvent être envisagés pour la grille comme le nombre d'ouvertures ou la forme. La figure 9 illustre les différentes quantités précédemment mentionnées. La courbe 80 est obtenue pour un rapport_diamètre de 0,05 et une valeur de p de 2,9 ; la courbe 82 pour un rapport_diamètre de 0,05 et une valeur de p de 2 ; la courbe 84 pour un rapport_diamètre de 0,037 et une valeur de p de 2 et la courbe 86 pour un rapport_diamètre de 0,02 et une valeur de p de 2,9.

Il est possible de constater que pour un tel dispositif, la valeur maximale des courbes 80, 82, 84 et 86 des autospectres adimensionnels de débits est faible, inférieur à $10^{-3}$ pour la courbe 80 et à $10^{-4}$ pour les courbes 82, 84 et 86. Avec de telles valeurs, le dispositif ne se comporte pas comme une source de débit ce qui favorise l'atténuation des ondes. Une grille est d'ailleurs la seule singularité simple (on entend pas singularité simple une singularité qui correspond à un quadripôle) qui présente cette caractéristique.

Le procédé peut en outre comprendre une étape de mesure du débit initial du fluide, c'est-à-dire le débit présent dans le fluide en l'absence du dispositif et une étape de mesure du débit en présence du dispositif. Le nombre de trous est alors ajusté pour réduire au mieux les perturbations acoustiques véhiculées par le fluide caloporteur et limiter la perte de charge. Cela permet d'assurer que la présence du dispositif n'entraîne pas une diminution du débit.

Le procédé peut comprendre une étape de minimisation de la valeur maximale de l'écart-type des fluctuations de pression de paroi à l'aval du dispositif d'isolation par modification des paramètres du dispositif d'isolation. Cela permet d'obtenir un dispositif d'isolation perturbant peu l'écoulement tout en atténuant le bruit

Dans le cas du dispositif comportant la grille précédemment présentée, l'évolution des fluctuations de pression peut être calculée de préférence sous une forme sans dimension en normalisant l'écart-type appelé σ par la perte de charge $\Delta$p en fonction de la longueur I à l'aval de la grille normalisée par le diamètre D de la grille. Cela permet de simplifier la minimisation.

Plusieurs courbes d'écart-type des fluctuations de pressions sont ainsi représentées sur la figure 7. Ces courbes sont issues de la bibliographie. Les dispositifs pour lesquels ces courbes sont représentées sont les dispositifs à grille précédemment considérés. Plus précisément, la courbe 88 est obtenue pour un rapport_diamètre de 0,05 et une valeur de p de 2; la courbe 90 pour un rapport_diamètre de 0,037 et une valeur de p de 2 ; la courbe 92 pour un rapport_diamètre de 0,05 et une valeur de p de 2,9 et la courbe 94 pour un rapport_diamètre de 0,02 et une valeur de p de 2,9.

Par comparaison de l'évolution des différentes courbes de la figure 7, par exemple des courbes 88 et 90 d'une part et des courbes 92 et 94 d'autre part, on constate que pour les grilles à plus gros orifices, le paramètre σ normalisé par la perte de charge $\Delta$p s'élève entre 0,4 et 0,7 alors que pour des grilles avec des orifices plus petits, le paramètre σ normalisé par la perte de charge $\Delta$p est de l'ordre de 0,1. On en déduit que l'intensité des fluctuations de pression est nettement diminuée pour des grilles plus finement percées. Cela permet d'éviter par la présence du dispositif génère la création de sources acoustiques intenses de pression.

L'observation des différentes courbes de la figure 7 permet de mettre en évidence qu'un autre paramètre joue un rôle important. C'est la position de la grille. En effet, comme une grille est un élément qui créée des fluctuations de pression locales importantes et rapidement incohérentes avec la distance, l'emplacement du dispositif d'isolation dans le circuit 4 de refroidissement a beaucoup d'importance.

Il est ainsi proposé un procédé de définition de la mise en place d'un dispositif d'isolation d'un circuit 4 de refroidissement d'un moteur 2 pour les fréquences sonores dans le circuit 4 de refroidissement. Le procédé comprend une étape de calcul de l'onde incidente sonore arrivant sur le dispositif d'isolation et de calcul de l'onde réfractée par le dispositif d'isolation, la position du dispositif dans le circuit 4 étant déterminée en minimisant l'amplitude de l'onde réfractée. L'amplitude de l'onde peut correspondre à la pression acoustique ou au débit acoustique de l'onde. Le procédé permet de localiser la zone efficace pour la mise en place du dispositif dans le circuit 4 de refroidissement. On entend par zone efficace une zone dans laquelle, lorsque le dispositif est positionné, le bruit est fortement diminué.

L'étape de minimisation peut également être menée pour plusieurs ondes initiales. Cela permet d'optimiser la structure pour plusieurs longueurs d'onde différentes et ainsi d'atténuer plusieurs fréquences entendues par l'utilisateur dans l'habitacle.

L'onde incidente peut être calculée par une méthode matricielle telle que décrite précédemment en utilisant des matrices (2x2) reliant les pressions et les débits acoustiques en entrée et en sortie de chaque élément du circuit 4 de refroidissement. Un tel calcul présente l'avantage d'être facile à mettre en oeuvre.

Dans le cas où l'onde incidente sonore arrivant sur le dispositif d'isolation est une onde stationnaire, cette onde stationnaire possède des noeuds et des ventres. La position préférée du dispositif correspondra à un ventre dans la propagation de l'onde stationnaire sonore. C'est en effet dans les ventres que l'amplitude de l'onde est maximale et donc à ces endroits que l'atténuation de l'onde sonore peut être la plus importante.

La minimisation peut être complétée par une étude de la variation de l'écart-type de pression en fonction de la position. C'est ce que représente la figure 6 précédemment commentée. Cela permet de confirmer les calculs précédents.

La minimisation peut en outre être accompagnée d'une étude de la variation de l'autospectre de pression pour plusieurs positionnements de la grille. L'évolution de cette grandeur est donnée sous une forme sans dimension en normalisant la pression par la perte de charge, la vitesse de l'écoulement dans les ouvertures et le diamètre des trous et en normalisant la fréquence par le nombre de Strouhal St. Cela permet de simplifier le calcul.

Plusieurs courbes d'autospectre de pression sont ainsi représentées sur la figure 7. Ces courbes sont issues de la bibliographie. Les dispositifs pour lesquels ces courbes sont représentées sont les dispositifs à grille précédemment considérés. Pour une position telle que le paramètre I/D vaut 0,8, les courbes 96, 98, 100 et 102 sont en trait continu alors que les courbes 104 et 106 sont en traits pleins si le paramètre I/D vaut 0,3. De plus, les courbes 96 et 104 sont obtenues pour un rapport_diamètre de 0,05 et une valeur de p de 2; la courbe 98 pour un rapport_diamètre de 0,037 et une valeur de p de 2 ; les courbes 100 et 106 pour un rapport_diamètre de 0,05 et une valeur de p de 2,9 et la courbe 102 pour un rapport_diamètre de 0,02 et une valeur de p de 2,9.

On déduit de l'observation de ces différentes courbes que le nombre de Strouhal de coupure est élevé pour un rapport I/D faible (de l'ordre de 0,1), le phénomène turbulent a pour dimension caractéristique le diamètre des ouvertures. Comme sur l'ensemble de la zone perturbée, le nombre de Strouhal se situe plus bas (à quelques $10^{-2}$) que

le nombre de Strouhal de coupure, la longueur de corrélation du phénomène turbulent est de l'ordre de D, diamètre de la grille. Ainsi, il est intéressant de placer le dispositif à une distance D de l'extrémité d'un conduit.

La position choisie peut aussi prendre en compte la facilité de montage. A titre d'exemple, il est ainsi plus facile de mettre en place le dispositif dans la durite 36 par rapport à le mettre dans la durite 32. Les figures de la figure 10 et 11 illustrent un exemple de mise en place dans la durite 2. Avant montage dans le véhicule, la durite a été sectionnée à l'endroit voulu et un dispositif 64 d'isolation a été inséré dans la section. Le dispositif 64 tient parce que son diamètre est légèrement supérieur à celui de la durite 36 et que la durite 36 est réalisée dans un matériau élastique. Après, juste à des fins expérimentales, la durite 36 est rendue étanche à l'aide de colliers.

Ainsi, le dispositif 64 selon tous les modes de réalisation présentés ultérieurement sera implanté en amont du coude 28 de raccordement durit/tube aérotherme 6 à une distance égale à D puisqu'il s'agit d'une position combinant efficacité de réduction acoustique et facilité de montage.

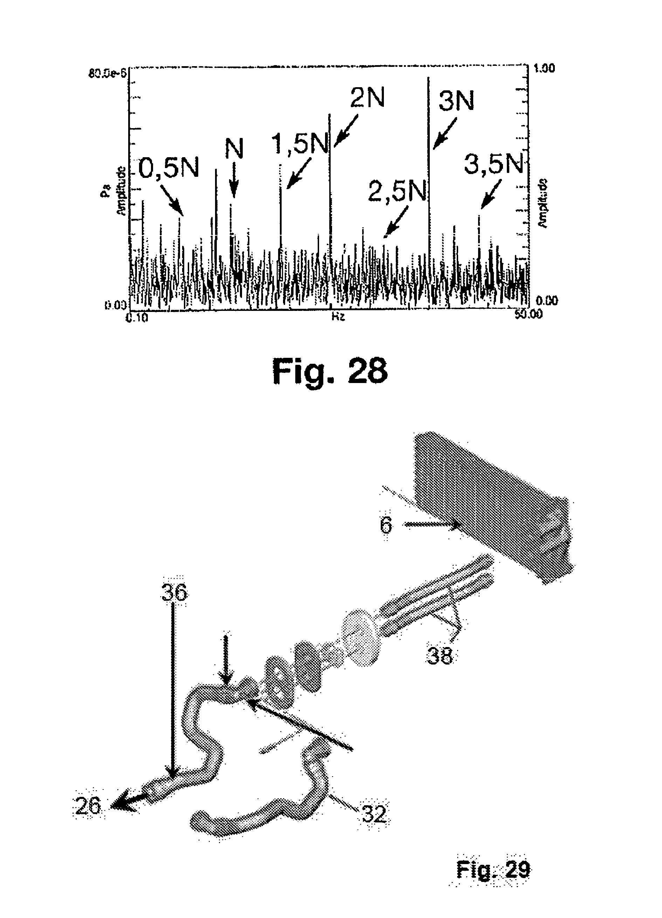

Dans une autre variante, illustrée à la figure 29, on utilise la durite existante reliant la sortie de l"aérotherme à la pompe à eau, sans la modifier. Dans ces conditions, seules deux possibilités de placement sont possibles, à chaque extrémité de la durite. De ce fait, la probabilité pour qu'une de ces positions correspondent à un ventre de l'onde acoustique est faible, de sorte que les performances techniques sont un peu réduites.

Toutefois, d'un point de vue économique, cette approche devient très intéressante car les coûts de conception et d'industrialisation d'une durite spécifique et d'un manchon disparaissent. Les opérations de montage sont elles aussi réduites car la durit peut être fournie directement équipée du dispositif antirésonnant. Ce dispositif antirésonnant se présentant sous la forme d'une pastille trouée, en aluminium ou en plastique vient se loger dans le rayon de courbure du coude, la vis de purge du circuit d'eau servant de repère pour le position angulaire du dispositif antirésonnant dans la durite.

Afin d'obtenir l'atténuation des ondes, il résulte des études précédentes qu'un dispositif 64 d'isolation d'un circuit 4 de refroidissement d'un moteur 2 pour les fréquences sonores comportant une grille 66 avec des ouvertures est une source passive qui est extrêmement efficace sans perturbation sur une distance trop longue.

Un tel dispositif 64 d'isolation est donc un silencieux hydraulique pour moteur 2 thermique. Lorsqu'il est placé dans le circuit 4 de refroidissement d'un moteur 2 thermique, il atténue l'amplitude des ondes acoustiques, produites par l'acyclisme vilebrequin et les couples résistants de l'arbre à cames et transmises au fluide caloporteur. Le bruit de pseudo-sirène modulée devient ainsi inaudible à l'intérieur de l'habitacle. En outre, le niveau de pression acoustique dans l'habitacle est réduit de plusieurs décibels dans la bande 100-1000Hz. De plus, un tel dispositif 64 est facile à mettre en place et à industrialiser du fait de son faible coût.

La figure 6 présente une vue d'un exemple de dispositif 64 d'isolation d'un circuit 4 de refroidissement d'un moteur 2 pour les fréquences sonores. Le dispositif 64 comprend une grille 66 circulaire comportant des ouvertures. La grille 66 est ainsi un disque de faible épaisseur percé. Le dispositif 64 d'isolation est un dispositif 64 passif.

La grille 66 permet d'atténuer l'amplitude des ondes acoustiques présentes dans le fluide caloporteur et de supprimer les ondes se propageant dans le conduit.

Le nombre, le diamètre et l'emplacement des ouvertures sont définis en fonction des fréquences de modulation et des fréquences porteuses à atténuer. La grille 66 du dispositif 64 est ainsi adaptée et précisément dimensionnée pour correspondre à des bruits basse fréquence d'origine mécanique. En particulier, la grille 66 filtre le bruit de pseudo-sirène modulée.

Plusieurs modes de réalisation peuvent ainsi être envisagés. A titre d'exemples, les figures 12 à 14 illustrent des vues schématiques de trois modes de réalisation particuliers.

La grille 66 a une épaisseur e et un premier diamètre D1. Il est avantageux que l'épaisseur e de la grille 66 soit supérieure au dixième du premier diamètre D1. En termes mathématiques, cela s'exprime par la relation suivante $e > D1/10$ (1)

Une telle condition assure que la célérité du son dans le fluide est proche de la célérité du son apparent du fluide. La célérité du son apparent du fluide est la célérité du son lorsque le fluide est présent dans une conduite. Ainsi, il est possible de négliger toutes les interactions entre le fluide et la structure.

A titre d'illustration, selon l'exemple de la figure 12, la grille 66 a un diamètre de 21 mm et une épaisseur de 2,5 mm. Pour de telles valeurs, la condition (1) est remplie. De ce fait, pour une telle grille 66, les interactions entre le fluide et la structure sont négligeables. Les grilles 66 des exemples des figures 12 à 15 vérifient également la condition (1).

La grille 66 peut comprendre quatre ouvertures 68 circulaires d'un deuxième diamètre D2 et sept ouvertures 70 circulaires d'un troisième diamètre D3. Les diamètres D2 et D3 des ouvertures 68, 70 sont suffisamment grands pour éviter la formation d'un bouchon causé par l'accumulation des impuretés présentes et véhiculées par le circuit 4 de refroidissement.

Le deuxième diamètre D2 peut en outre être supérieur au troisième diamètre D3. Des trous de diamètres différents s'adressent à des longueurs d'ondes différentes. Cela permet ainsi d'améliorer l'effet de filtrage des ondes sonores. C'est le cas des modes de réalisation selon les exemples 12 à 15.

A titre d'exemple, le deuxième diamètre D2 peut être égal à deux fois le troisième diamètre D3. Selon les exemples des modes de réalisation des figures 12 à 15, le deuxième diamètre vaut 4 mm et le troisième diamètre s'élève à 2 mm.

Les centres des quatre ouvertures 68 peuvent être agencés de manière à former les quatre coins d'un carré. Les quatre ouvertures 68 sont donc équidistants les uns des autres.

Selon l'exemple de la figure 12, les quatre ouvertures 68 sont placées en périphérie du disque.

En outre, les sept ouvertures 70 de diamètre 2 mm forment une croix placée entre les ouvertures de 4 mm. La distance entre deux ouvertures 70 est différente suivant la branche de la croix. Sur la branche la plus longue, la distance entre deux ouvertures 70 est deux fois plus faible que sur l'autre branche. En outre, le centre de la croix peut correspondre au centre du carré.

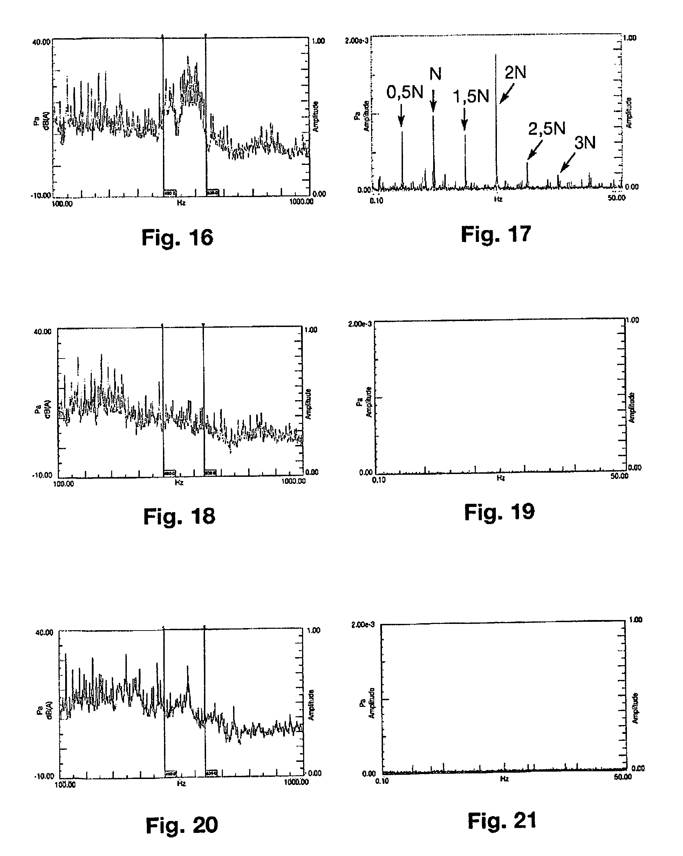

La capacité du dispositif 64 à atténuer une pseudo-sirène modulée dans l'habitacle peut être évaluée grâce à l'outil appelé $I_{bruit}$ et présenté plus haut. Cet outil permet de quantifier la prestation acoustique attendue lorsque le dispositif 64 est intégré dans le véhicule. Le calcul de $I_{bruit}$ se fait par utilisation des spectres de pression acoustique et d'enveloppe qui sont représentés aux figures 16 à 21.

L'absence de pseudo-sirène modulée se traduit par des valeurs de $I_{bruit}$ comprises entre 0 et 3 dB. 0dB correspond au seuil d'audibilité d'une pseudo-sirène modulée dans l'habitacle de véhicule. C'est le niveau de référence.

Tableau 1 : Performances acoustiques pour différents montages

| Montage | $I_{bruit}$ (dB) | Conséquence |
| --- | --- | --- |
| Véhicule état origine | 13 | Bruit fort (Inacceptable) |
| Véhicule muni d'un shunt | 1,7 | Absence de bruit (0 défaut) |
| Véhicule muni d'un dis-positif 64 selon la figure 12 | -6,1 | Absence de bruit (0 défaut) |

Lorsque le véhicule dans son état d'origine est considéré, une valeur de $I_{bruit}$ de 13 dB est mesurée ce qui correspond à un bruit important dans l'habitacle du véhicule. Cela ne peut être toléré.

Un test appelé « véhicule muni d'un shunt » est également effectué dans lequel le circuit 4 de refroidissement ne comporte pas de liquide de refroidissement. Pour cela, les durits 32 et 36 sont remplacées par une durit qui supprime l'alimentation de l'aérotherme 6 en fluide caloporteur.

Lorsque le véhicule est muni du shunt, il est mesuré dans ce cas une valeur de $I_{bruit}$ de 1,7 dB. Dans une telle configuration, la propagation des ondes acoustiques dans le fluide caloporteur en direction de l'habitacle du véhicule est stoppée. La valeur de $I_{bruit}$ mesurée correspond tout naturellement à une sensation « Absence de bruit », sensation confirmée par des écoutes subjectives.

Pour un test en présence du dispositif 64 selon l'exemple de la figure 6, une valeur de $I_{bruit}$ de -6,1 dB est mesurée. Cela correspond à un bruit qui n'est pas audible pour l'oreille humaine. On peut considérer alors que le bruit de pseudo-sirène modulée disparaît aussi totalement à l'intérieur du véhicule. Il est notable que les performances obtenues avec le dispositif 64 selon le mode de réalisation de la figure 12 sont meilleures que celle obtenue dans la configuration « véhicule muni d'un shunt ». Cette valeur largement inférieure de $I_{bruit}$ s'explique par le fait que le dispositif 64 de la figure 12 ne supprime pas la voie de transfert par le fluide. Ceci permet d'éviter le renforcement des deux autres voies de transfert que sont la voie solidienne et aérienne. La voie aérienne correspond à la propagation du son dans l'air et le voie solidienne au fait que le moteur est fixé au véhicule.

Les différences entre les performances des trois tests s'observent également par comparaison des figures 16 à 21. Les figures 16 et 17 illustrent respectivement des spectres de pression acoustique et de d'enveloppe pour le véhicule dans son état d'origine. Les figures 18 et 19 montrent respectivement des spectres de pression acoustique et de d'enveloppe pour la configuration de « véhicule muni d'un shunt ». Les figures 20 et 21 illustrent respectivement des spectres de pression acoustique et de d'enveloppe pour le véhicule muni du dispositif 64 de la figure 12. A des fins de comparaisons, les échelles sont identiques quelle que soit la représentation.

Par comparaison des différentes figures, il est possible de constater que les performances du dispositif 64 selon l'exemple de la figure 12 dépassent largement la suppression du rayonnement du bruit de pseudo-sirène modulée dans l'habitacle. En effet, une réduction importante du niveau de pression acoustique dans l'habitacle entre 100 - 1000Hz est observée. Le niveau de pression acoustique de référence dans cette gamme de fréquence est $2.10^{-5}$ Pa soit 3,8 dB.

Le dispositif 64 selon le mode de réalisation de la figure 12 permet ainsi la réduction du niveau de pression acoustique entre 500 et 600Hz et la disparition de toutes les fréquences de modulation issue du moteur 4.

La grille 66 selon le mode de réalisation de la figure 13 se distingue de la grille 66 selon la figure 2 par une disposition différente des ouvertures 68 et 70. Le nombre et le diamètre des deux familles d'ouvertures (diamètres de D2 = 4 mm et D3 = 2mm) restent inchangés. En comparaison de la grille 66 selon la figure 12, le carré formé par les quatre trous 68 de diamètre 4mm est davantage ramassé sur le centre du disque. Six des sept ouvertures 70 de diamètre 2mm sont disposées en périphérie du carré. La septième ouverture 70 est placée au centre de la grille 66.

Comme pour le dispositif 64 de la figure 12, la capacité à atténuer les ondes acoustiques provoquant du bruit de pseudo-sirène modulée dans l'habitacle est évaluée au travers de l'outil I$_{bruit}$. Les résultats pour chaque configuration sont présentés ci-dessous :

Tableau 2 : Performances acoustiques pour différents montages

| Montage | I$_{bruit}$ (dB) | Conséquence |
|---|---|---|
| Véhicule état origine | 13 | Bruit fort (Inacceptable) |
| Véhicule muni d'un shunt | 1,7 | Absence de bruit (0 défaut) |
| Véhicule muni d'un dis-positif 64 selon la figure 13 | -3,9 | Absence de bruit (0 défaut) |

Les tests concernant le véhicule à l'état d'origine et le véhicule muni d'un shunt sont identiques à ceux effectués pour le véhicule muni d'un dispositif 64 selon l'exemple de la figure 12.

Pour le dispositif 64 selon l'exemple de la figure 13, la valeur de I$_{bruit}$ est une valeur négative. Le niveau de pseudo pseudo-sirène modulée dans l'habitacle est ainsi très inférieur au seuil d'audibilité. Les performances sont ainsi bien améliorées par rapport au véhicule muni d'un shunt.

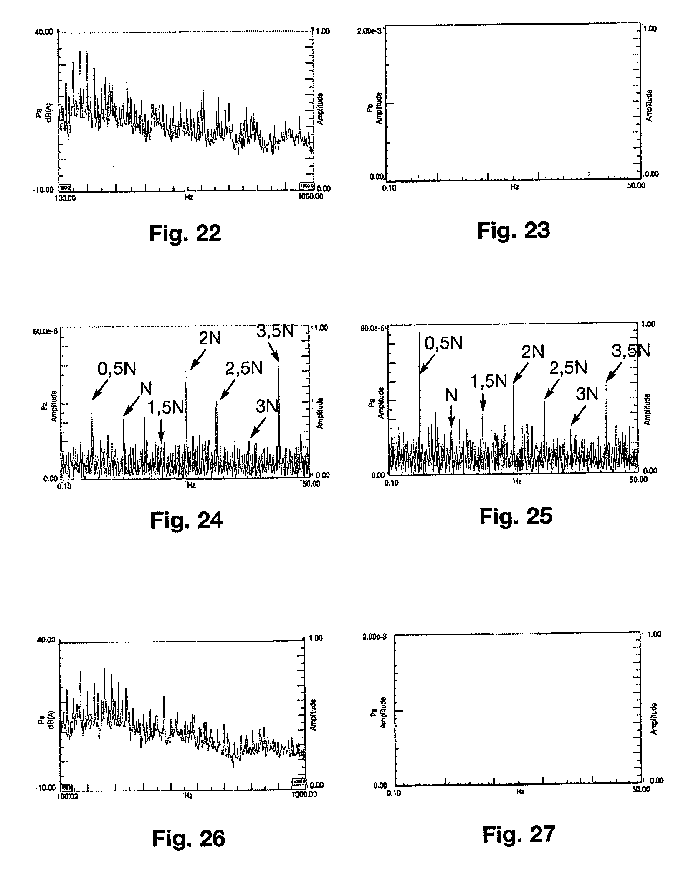

Les différences entre les performances des trois tests s'observent également par comparaison des figures 16 à 19 d'une part et des figures 22 et 23 d'autre part. Les figures 22 et 23 illustrent respectivement des spectres de pression acoustique et de d'enveloppe pour le véhicule muni du dispositif 64 de la figure 13.

Par comparaison des différentes figures, il est possible de constater que le dispositif 64 selon l'exemple de la figure 13 permet également d'obtenir une réduction du niveau de la pression acoustique de plusieurs décibels dans l'habitacle.

La comparaison des spectres d'enveloppe des figures 21 et 23 montre que la géométrie de la grille 66 a un impact sur l'amplitude des fréquences de modulation émergentes. Afin de faciliter cette comparaison, les figures 24 et 25 correspondent aux figures 21 et 23 avec une échelle différente mettant mieux en évidence les fréquences résiduelles.

Ainsi, le dispositif 64 de la figure 12 atténue plus que le dispositif 64 de la figure 13 les fréquences de modulation correspondant aux ordres 0,5 et 1,5. Le dispositif 64 de la figure 13 atténue plus que le dispositif 64 de la figure 12 les fréquences de modulation correspondant aux ordres 1 et 2. Les amplitudes des fréquences de modulation correspondant aux ordres 2,5 et 3 sont inchangées.

La grille 66 selon le mode de réalisation de la figure 14 se distingue de la grille 66 selon la figure 12 par une disposition différente des ouvertures 68 et 70. Le nombre et le diamètre des deux familles d'ouvertures (diamètres de D2 = 4 mm et D3 = 2mm) restent inchangés. Les ouvertures 68 et 70 sont réparties selon trois droites parallèles. Deux ouvertures 68 des quatre ouvertures 68 sont selon un diamètre avec une des sept ouvertures 70. Trois des sept ouvertures 70 et une des quatre ouvertures 68 sont situés selon une corde parallèle au diamètre. En outre, selon l'exemple de la figure 14, les quatre ouvertures 68 sont agencées de manière à former un Y. En outre l'agencement des ouvertures 68 et 70 est tel que la grille présente une symétrie axiale par rapport au diamètre. Sur chacune des cordes parallèles au diamètre, les trois ouvertures 70 de petit diamètre se suivent, l'ouverture 68 de plus grand diamètre étant placé à une extrémité.

La grille 66 circulaire peut comporter un grillage 72 comme dans l'exemple ne faisant pas partie de l'invention de la figure 15 où cette grille 66 se présente sous la forme d'un grillage 72 fin et régulier sur toute sa surface. Chaque maille peut être assimilée à un trou circulaire de diamètre 1 mm environ.

Comme pour le dispositif 64 de la figure 12, la capacité à atténuer les ondes acoustiques provoquant du bruit de pseudo-sirène modulée dans l'habitacle est évaluée au travers de l'outil I$_{bruit}$. Les résultats pour chaque configuration sont présentés ci-dessous :

Tableau 3 : Performances acoustiques pour différents montages

| Montage | I$_{bruit}$ (dB) | Conséquence |
|---|---|---|
| Véhicule état origine | 13 | Bruit fort (Inacceptable) |
| Véhicule muni d'un shunt | 1,7 | Absence de bruit (0 défaut) |
| Véhicule muni d'un dispositif 64 selon l'exemple 15 | 0,5 | Absence de bruit (0 défaut) |

Les tests concernant le véhicule à l'état d'origine et le véhicule muni d'un shunt sont identiques à ceux effectués pour le véhicule muni d'un dispositif 64 selon l'exemple de la figure 12.

Pour le dispositif 64 selon l'exemple de la figure 15, la valeur de I$_{bruit}$ est inférieure à 3dB. Le niveau de pseudo-sirène modulée dans l'habitacle est ainsi très supportable et à peine audible. Les performances sont ainsi bien améliorées par rapport au véhicule muni d'un shunt.

Les différences entre les performances des trois tests s'observent également par comparaison des figures 16 à 19 d'une part et des figures 26 et 27 d'autre part. Les figures 26 et 27 illustrent respectivement des spectres de pression acoustique et de d'enveloppe pour le véhicule muni du dispositif 64 de la figure 15.

Par comparaison des différentes figures, il est possible de constater que le dispositif 64 selon l'exemple de la figure 15 permet également d'obtenir une réduction du niveau de la pression acoustique de plusieurs décibels dans l'habitacle.

La comparaison des spectres d'enveloppe des figures 21 et 27 montre que la géométrie de la grille 66 a un impact sur l'amplitude des fréquences de modulation émergentes. Afin de faciliter cette comparaison, la figure 28 correspond à la figure 27 avec une échelle différente mettant mieux en évidence les fréquences résiduelles.

Ainsi, le dispositif 64 de la figure 12 atténue plus que le dispositif 64 de la figure 15 les fréquences de modulation correspondant aux ordres 1, 1,5, 2 et 3. Le dispositif 64 de la figure 15 atténue plus que le dispositif 64 de la figure 12 les fréquences de modulation correspondant aux ordres 0,5, 2,5 et 3,5.

La comparaison entre les spectres d'enveloppe des figures 24 et 27 montrent des performances du dispositif 64 selon la figure 15 en retrait pour les ordres 1, 1,5, 2 et 3 par rapport à celles du dispositif 64 selon l'exemple de la figure 13. En outre, le dispositif 64 de la figure 15 atténue plus que le dispositif 64 de la figure 13 les fréquences de modulation correspondant aux ordres 0,5, 2,5 et 3,5.

Comme le grillage 72 couvre la globalité de la grille 66 selon l'exemple ne faisant pas partie de l'invention de la figure 9, la finesse des mailles peut constituer un obstacle aux impuretés présentes et véhiculées par le fluide caloporteur. Ainsi, il est aussi possible de combiner les modes de réalisations précédents et il peut être envisagé que les ouvertures des exemples de dispositifs 64 selon les figures 12, 13 et 14 comportent un grillage 72 du type utilisé sur l'intégralité de la surface de la grille 66 selon le mode de réalisation de la figure15. De telles grilles 66 seraient moins sujettes au problème des impuretés.

Suivant la nature des ondes à atténuer, les performances dépendant de la géométrie de la grille 66, il peut être plus ou moins avantageux de réaliser un des dispositifs 64 précédemment présentées avec sa grille 66 correspondante.

La grille 66 peut être réalisée avec un matériau inoxydable. Cela permet de conférer à l'ensemble du dispositif 64 une meilleure durée de vie. Chacune des grilles 66 selon les modes de réalisation des exemples 12 à 14 sont réalisées à partir d'un matériau inoxydable.

Le dispositif 64 peut comprendre en outre un tube 74 de support. Le tube définit un passage de fluide, la grille étant en travers de ce passage. Un tel tube 74 sert de support pour faciliter le montage du dispositif 64, et notamment dans la durite 36 du circuit 4 de refroidissement comme proposé précédemment.

**Revendications**

1. Circuit de refroidissement d'un moteur comprenant un dispositif (64) d'isolation du circuit (4) de refroidissement du moteur pour des fréquences sonores comprises entre 300 Hz et 1000 Hz, de préférence entre 500 Hz et 700 Hz, le dispositif (64) consistant en une grille (66) circulaire comportant des ouvertures, la grille (66) ayant une épaisseur (e) et un premier diamètre (D1), l'épaisseur de la grille (66) étant supérieure au rapport au dixième du premier diamètre (D1), **caractérisé en ce que** la grille (66) comporte exactement onze ouvertures (68, 70) circulaires de diamètres prédéterminés, dont exactement quatre ouvertures (68) circulaires d'un deuxième diamètre et exactement sept ouvertures (70) circulaires d'un troisième diamètre, le deuxième diamètre étant supérieure au troisième diamètre.

2. Circuit de refroidissement selon la revendication précédente, **caractérisé en ce que** ie deuxième diamètre est égal à deux fois le troisième diamètre.

3. Circuit de refroidissement selon l'une des revendications précédentes, **caractérisé en ce que** les centres des quatre ouvertures (68) sont agencés de manière à former les coins d'un carré.

4. Circuit de refroidissement selon la revendication précédente, **caractérisé en ce que** les sept ouvertures (70) forment une croix dont le centre correspond au centre du carré.

5. Circuit de refroidissement selon la revendication 3, **caractérisé en ce que** six des sept ouvertures (70) sont en périphérie du carré et que la septième ouverture (70) est au centre du carré.

**6.** Circuit de refroidissement selon l'une des revendications précédentes, **caractérisé en ce que** les ouvertures (68, 70) sont réparties selon trois droites parallèles,

  - deux ouvertures (68) des quatre ouvertures (68) étant selon un diamètre avec une des sept ouvertures (70) et
  - trois des sept ouvertures (70) et une des quatre ouvertures (68) étant sur chacune des droites extrêmes selon une corde parallèle au diamètre.

**7.** Circuit de refroidissement selon l'une des revendications précédentes, **caractérisé en ce que** la grille (66) est réalisée avec un matériau inoxydable.

**8.** Circuit de refroidissement selon l'une des revendications précédentes, **caractérisé en ce que** le dispositif (64) comprend un tube (74) de support définissant un passage de fluide, la grille (66) étant au travers du passage.

**9.** Circuit de refroidissement selon l'une des revendications précédentes, **caractérisé en ce qu'**il comporte une durit (36) reliant un boîtier (34) de sortie d'eau à un aérotherme (6), le dispositif (64) étant dans la durit (36) à une distance sensiblement égale au diamètre de la grille (66) par rapport à l'extrémité de la durite du côté aérotherme (6).

**10.** Circuit de refroidissement selon l'une des revendications 1 à 8, **caractérisé en ce qu'**il comporte une durit (36) reliant un boîtier (34) de sortie d'eau à un aérotherme (6), le dispositif (64) étant placé à l'extrémité de la durit du côté aérotherme (6).

**11.** Véhicule, **caractérisé en ce qu'**il comporte le circuit de refroidissement selon l'une des revendications précédentes.

**Patentansprüche**

**1.** Kühlkreis eines Motors, eine Vorrichtung (64) zum Isolieren des Kühlkreises (4) des Motors für Tonfrequenzen zwischen 300 Hz und 1 000 Hz, vorzugsweise zwischen 500 Hz und 700 Hz umfassend, wobei die Vorrichtung (64) aus einem runden Gitter (66) besteht, das Öffnungen aufweist, wobei das Gitter (66) eine Dicke (e) und einen ersten Durchmesser (D1) aufweist, wobei die Dicke des Gitters (66) größer als das Verhältnis des Zehntels des ersten Durchmessers (D1) ist, **dadurch gekennzeichnet, dass** das Gitter (66) genau elf runde Öffnungen (68, 70) mit vorbestimmten Durchmessern umfasst, davon genau vier runde Öffnungen (68) mit einem zweiten Durchmesser und genau sieben runde Öffnungen (70) mit einem dritten Durchmesser, wobei der zweite Durchmesser größer ist, als der dritte Durchmesser.

**2.** Kühlkreis nach dem vorherigen Anspruch, **dadurch gekennzeichnet, dass** der zweite Durchmesser gleich zwei Mal dem dritten Durchmesser ist.

**3.** Kühlkreis nach einem der vorherigen Ansprüche, **dadurch gekennzeichnet, dass** die Mitten der vier Öffnungen (68) derart angeordnet sind, dass sie die Ecken eines Quadrats bilden.

**4.** Kühlkreis nach dem vorherigen Anspruch, **dadurch gekennzeichnet, dass** die sieben Öffnungen (70) ein Kreuz bilden, dessen Mitte der Mitte des Quadrats entspricht.

**5.** Kühlkreis nach Anspruch 3, **dadurch gekennzeichnet, dass** sich sechs der sieben Öffnungen (70) am Rand des Quadrats befinden und sich die siebte Öffnung (70) in der Mitte des Quadrats befindet.

**6.** Kühlkreis nach einem der vorherigen Ansprüche, **dadurch gekennzeichnet, dass** die Öffnungen (68, 70) über drei parallele Geraden verteilt sind,

  - wobei zwei Öffnungen (68) der vier Öffnungen (68) in einem Durchmesser mit einer der sieben Öffnungen (70) sind,
  - wobei drei der sieben Öffnungen (70) und eine der vier Öffnungen (68) auf jeder der äußeren Geraden auf einer zum Durchmesser parallel verlaufenden Linie liegen.

**7.** Kühlkreis nach einem der vorherigen Ansprüche, **dadurch gekennzeichnet, dass** das Gitter (66) aus einem nichtrostenden Material gefertigt ist.

**8.** Kühlkreis nach einem der vorherigen Ansprüche, **dadurch gekennzeichnet, dass** die Vorrichtung (64) ein Halterohr (74) umfasst, das einen Flüssigkeitsdurchlass definiert, wobei das Gitter (66) quer durch den Durchlass verläuft.

**9.** Kühlkreis nach einem der vorherigen Ansprüche, **dadurch gekennzeichnet, dass** er einen Schlauch (36) umfasst, der ein Wasserauslaufgehäuse (34) mit einem Luftheizgerät (6) verbindet, wobei sich die Vorrichtung (64) in einem Abstand im Schlauch (36) befindet, der in etwa gleich dem Durchmesser des Gitters (66) im Verhältnis zum Ende des Schlauches auf Seiten des Luftheizgeräts (6) ist.

**10.** Kühlkreis nach einem der Ansprüche 1 bis 8, **dadurch gekennzeichnet, dass** er einen Schlauch (36) umfasst, der ein Wasserauslaufgehäuse (34) mit einem Luftheizgerät (6) verbindet, wobei die Vorrichtung (64) am Ende des Schlauches auf Seiten des Luftheizgeräts (6) angeordnet ist.

**11.** Fahrzeug, **dadurch gekennzeichnet, dass** es den Kühlkreis nach einem der vorherigen Ansprüche umfasst.

**Claims**

**1.** Cooling circuit for an engine, comprising a device (64) for insulating the cooling circuit (4) of the engine for sound frequencies of between 300 Hz and 1 000 Hz, preferably between 500 Hz and 700 Hz, the device (64) consisting of a circular grille (66) comprising openings, the grille (66) having a thickness (e) and a first diameter (D1), the thickness of the grille (66) being greater than one tenth of the first diameter (D1), **characterised in that** the grille (66) comprises exactly eleven circular openings (68, 70) with predetermined diameters, including exactly four circular openings (68) with a second diameter and exactly seven circular openings (70) with a third diameter, the second diameter being greater than the third diameter.

**2.** Cooling circuit according to the preceding claim, **characterised in that** the second diameter is equal to twice the third diameter.

**3.** Cooling circuit according to one of the preceding claims, **characterised in that** the centres of the four openings (68) are arranged so as to form the corners of a square.

**4.** Cooling circuit according to the preceding claim, **characterised in that** the seven openings (70) form a cross, the centre of which corresponds to the centre of the square.

**5.** Cooling circuit according to claim 3, **characterised in that** six of the seven openings (70) are at the periphery of the square and the seventh opening (70) is at the centre of the square.

**6.** Cooling circuit according to one of the preceding claims, **characterised in that** the openings (68, 70) are distributed along three parallel straight lines,

   - two openings (68) of the four openings (68) being along a diameter with one of the seven openings (70), and
   - three of the seven openings (70) and one of the four openings (68) being on each of the end straight lines along a chord parallel to the diameter.

**7.** Cooling circuit according to one of the preceding claims, **characterised in that** the grille (66) is produced from a non-oxidisable material.

**8.** Cooling circuit according to one of the preceding claims, **characterised in that** the device (64) comprises a support tube (74) defining a fluid passage, the grille (66) being through the passage.

**9.** Cooling circuit according to one of the preceding claims, **characterised in that** it comprises a hose (36) connecting a water-outlet box (34) to a unit heater (6), the device (64) being in the hose (36) at a distance substantially equal to the diameter of the grille (66) with respect to the end of the hose at the same side as the unit heater (6).

**10.** Cooling circuit according to one of claims 1 to 8, **characterised in that** it comprises a hose (36) connecting a water-outlet box (34) to a unit heater (6), the device (64) being placed at the end of the hose on the same side as the unit heater (6).

**11.** Vehicle, **characterised in that** it comprises a cooling circuit according to one of the preceding claims.

**Fig. 1**

**Fig. 2**

**Fig. 3**

**Fig. 4**

Source ⬭ Quadripôle //// Dipôle

**Fig. 5**

Fig. 6

Fig. 7

Fig. 8

**Fig. 9**

d

p

D

**Fig. 10**

64

36

**Fig. 11**

36

64

66

68

70

74

**Fig. 12**

64

66

70

68

74

**Fig. 13**

64

70

66

68

74

**Fig. 14**

64

72

74

66

**Fig. 15**

**Fig. 16**

**Fig. 17**

**Fig. 18**

**Fig. 19**

**Fig. 20**

**Fig. 21**

**Fig. 22**

**Fig. 23**

**Fig. 24**

**Fig. 25**

**Fig. 26**

**Fig. 27**

**Fig. 28**

**Fig. 29**

**EP 2 375 029 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19943918 A1
- JP 2007155217 A
- WO 04111520 A
- US 2004055816 A